# EUROPEAN PATENT APPLICATION

(11) **EP 3 530 600 A1**
(43) Date of publication of application: **28.08.2019**
(21) Application number: 18158796.5
(22) Date of filing: 27.02.2018
(51) Int. Cl.: B65G 53/24, B65G 53/66

(54) **CONVEYOR SYSTEM**

(71) Applicant: PIAB AB, 183 04 Täby (SE)
(72) Inventor: BERG, Mattias, SE-183 04 TÄBY (SE); MÖLLE, Gustav, SE-183 04 TÄBY (SE); NILSÈN, Anders, SE-183 04 TÄBY (SE); KÖHLER, Jonas, SE-183 04 TÄBY (SE)
(74) Representative: Brann AB

(57) **Abstract**

A conveyor system (10) for transporting a transportable material (M) said conveyor system (10) comprising:
a conveyor device (1) operative to provide negative air pressure or vacuum through said conveying line (13); a material feeder device (2);
wherein the conveyor device (1) comprises at least one system pressure sensor (1a), wherein the at least one system pressure sensor (1a) is arranged to monitor one or more system pressure level(s) inside the conveyor device (1) and via a sensor communication line (3) give at least one material level signal (1aa) to a controller (4), wherein the controller (4) is adapted to control the valve (6) and/or a mass-flow (M), respectively, of the material feeder device (2) in dependence of output from the at least one system pressure level sensor (1a) to control amount of air injected into the conveying line (13) at the material feeder device (2)

## Description

### FIELD

The present disclosure relates to fluid conveyor systems, generally to vacuum conveyor systems.

### BACKGROUND

Vacuum conveyor systems, sometimes also referred to as vacuum conveyors, are well-known for the transport of transportable material between, for example, a first origin location and a second destination location in a plurality of interconnected pipes by means of a fluid under negative pressure such as vacuum. A typical vacuum conveyor system includes a number of pipes interconnected to a continuous conveying line such as a pipe-line to transport pneumatically transportable material therein. Various conveyor devices, at the first location, the origin and/or the second location, the destination, provide a force affecting a conveying fluid, such as air, flowing in the pipe-line for transport of the transportable material within the pipeline. Thus, the vacuum conveyor system transports material by means of a transporting fluid under negative pressure or vacuum in a continuous conveying line. Often vacuum is used in these vacuum conveyor systems and they are therefore sometimes simply referred to as "vacuum conveying technology".

The pipes forming the pipe-line, i. e. the conveying line of the conveyor system for instance using vacuum conveying technology may be arranged in any manner that allows the material to be transported between various locations including straight pipes but also bent pipes. It will be appreciated that the distances between origin and destination locations in the conveying line may be quite large and that a material transport speed may be quite high within the conveying line.

The vacuum conveyor systems are also typically required to handle a large variety of products from bridging to free flowing powder.

A problem when using a vacuum conveyor system is to tune all equipment in the system to obtain a desired capacity without risk of blockage in the conveying line.

When tuning a vacuum conveyor system, there is always need to balance between high reliability and capacity. When trying to achieve a high capacity there is sometimes a need to convey in a dense phase, meaning more material in the conveying line. Depending on the material, conveying line length and routing of the conveying line this could lead to a material blockage in the conveying line.

Even if a good setting is found, factors in the surrounding environment such as temperature, atmospheric pressure and humidity could very well affect and change the conveying conditions so that a material blockage in the conveying line occurs.

Once material blockage occurs, it is a time-consuming activity to clear out the conveying line leading to production loss and low overall capacity.

### SUMMARY

The present invention according to one aspect is based on a control system that monitors and acts to prevent material blockage in the conveying line by using a non-manual controlling, typically implemented by means of using an algorithm based control system implemented as a controller arranged to control the vacuum conveyor system and in the controller using a software based control of the vacuum conveyor system, typically by an algorithm based function executed by the controller. The controller is adapted to control inlet-air of the conveying line and/or a mass-flow source respectively of the material to be transported in the conveying line in dependence of input from a system pressure sensor providing system pressure signals. The system pressure signals are transmitted to the controller and control signals are sent from the controller to the material feeder device and/or a pipe emptying unit.

To determine the mixture of air/material an air-inlet valve, or vent, at a material feeding point, typically the material feeder device, is arranged to control the amount of air injected (inlet-air) into the system, typically at the material feeding point. The pipe-emptying unit is controlled by an algorithm based function executed by the controller which uses information from the system pressure sensor to estimate when the pipe emptying function of the pipe emptying unit, in particular a pipe emptying valve shall be activated.

The system pressure sensor is typically arranged to monitor system pressure such as system vacuum pressure and arranged to transmit a system pressure signal to the software based controller and from the controller transmitting a control signal to the material feeder device having a valve.

By monitoring the vacuum level inside the conveying system, in particular inside the conveyor device, it is possible to predict when a material blockage, typically in the conveying line, is about to happen. When indication of material blockage is shown, and the controller acts by an increase of air to the conveying line to reduce material load and hence avoid material blockage in the conveying line. The mixture air/material is controlled by inlet-air at a material feeding point.

Typically, as a first step to prevent blockage, the air-inlet valve at a material feed point is arranged to ease the material load in the conveying line. If that doesn't help and a critical system pressure (vacuum) level is reached inside the system, a second valve in the conveying line is opened to cut the material flow and empty the conveying line. Once vacuum level returns from the critical level the second valve closes, and material transport in the conveying line can continue.

Typically, when a critical vacuum is reached and an event described above (a cycle) occurs, the cycle is evaluated and learned that it is not a safe conveying and the mixture of material/air is adjusted by change the air-inlet valve to a more suitable position and limit the adjustment range so the valve won't go back to an unsafe position again.

According to an embodiment of the invention, there is provided a conveyor system for transporting a transportable material by means of a fluid for transporting the transportable material between a first conveying line portion and a second conveying line portion. The conveying line portions comprise a plurality of pipes forming a continuous conveying line. The conveyor system comprises:
a conveyor device in fluid connection to one of said first or said second conveying line portions operative to provide negative air pressure or vacuum through said conveying line;
a material feeder device and a pipe emptying unit. The conveyor device comprises at least one system pressure level sensor, wherein the at least one system pressure level sensor is arranged to monitor the system pressure level(s) inside the conveyor device and via the one or more system pressure communication lines arranged to give a system pressure level signal to a controller and from the controller via a first control signal line transmit a control signal to the material feeder device having a valve, wherein the controller is adapted to control the valve
and/or a mass-flow, respectively, of the material feeder device in dependence of output from the at least one system pressure level sensor to control amount of air injected into the conveying line at the feeder device, and wherein the conveying line comprises a second valve in the conveying line and the second valve can be opened to cut the material flow and empty the conveying line, and once system pressure level returns from a critical system pressure level, the second valve is arranged to close, such that material transport in the conveying line can continue.

The present invention according to various embodiments benefits the user by allowing tuning for higher capacity minimizing the risk of material blockage in the conveying line. This ensures a reliable production.

### BRIEF DESCRIPTION OF THE DRAWINGS

For a more complete understanding of the present disclosure and further advantages thereof, reference is now made to the following detailed description taken in conjunction with the drawing in which:

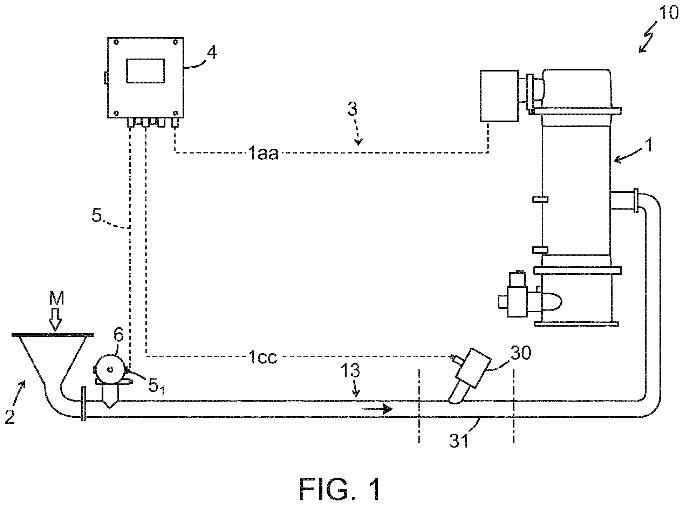

FIG. 1 illustrates a vacuum conveyor system comprising a conveyor device having a system pressure sensor, and a conveying line provided with a pipe emptying unit.

### DETAILED DESCRIPTION

Reference will now be made to the accompanying drawings, which are intended to at least assist in illustrating the various pertinent features of the presented inventions. In this regard, the following description is presented for purposes of illustration and description. Furthermore, the description is not intended to limit the disclosed embodiments of the inventions to the forms disclosed herein. Consequently, variations and modifications commensurate with the following teachings, and skill and knowledge of the relevant art, are within the scope of the presented inventions.

Now is referred to FIG. 1, which illustrates one embodiment of a vacuum conveyor system 10 according to the invention. The vacuum conveyor system 10 comprises at least one conveyor device 1 for conveying a transportable material M (not shown) in the vacuum conveyor system 10 by means of a fluid, such as compressed air having a negative pressure, herein vacuum, for conveying the transportable material M between (typically from) a first conveying line portion 11 and a second conveying line portion 12 (see dividing line intended to schematically illustrate the conveying line portions 11, 12). The conveying line portions 11, 12 comprise a plurality of interconnected pipes (not shown) forming a conveying line 13 (which may as an example, but not limited there to, be circular in cross-section), the pipes of the conveying line 13 can be made of stainless-steel for instance, or any other suitable material depending on application, forming the conveying line 13, for transporting the material M. The vacuum conveyor system 10 according to this embodiment comprises one conveyor device 1, connected at the second conveying line portion 12 and a material feeder device 2 connected at the first conveying line portion 11.

The conveyor device 1 provides a force (see direction of flow in the conveying line 13 illustrated by an arrow) affecting a fluid, such as air, flowing in the conveying line 13, typically a pipe-line for conveying (transport) of the transportable material M within the pipeline. Thus, the conveying line 13 transports the material M under negative fluid pressure, typically vacuum. Herein, vacuum is provided by the conveyor device 1.

Herein, the term "first portion" includes an origin location and the term "second portion" includes a destination location.

The conveying line portions 11, 12 comprise a plurality of pipes forming a continuous conveying line 13 to the conveyor device 1. The conveyor device 1 comprises a fluid source, such as an air source, connected to one of the first or second conveying line portions 11, 12 and operative to provide fluid pressure, typically negative air pressure, or vacuum, through the continuous conveying line 13.

Herein this disclosure, the term "conveyor device" includes at least one of the following: fluid driven ejector-pump, electric vacuum pump, vacuum conveyor device. The conveyor device 1 can be a conventional vacuum conveyor unit, for instance manufactured and sold by the applicant Piab AB, Sweden.

Herein this disclosure, the term "transportable material" any material that can be transported by means of a fluid such as air, including bridging to free flowing powder.

Herein this disclosure, the term "fluid" includes air, nitrogen, but is not limited to these fluids.

Herein this disclosure, the term "fluid source" is, comprised in or connected to: an ejector-pump, electric vacuum pump and feed-hopper but is not limited to these and if the fluid is air, the source is referred to as an "air-source".

According to this specific embodiment, the conveyor device 1 has one system pressure sensor 1a provided in the conveyor device 1.
The system pressure sensor 1a is arranged to monitor material level inside the conveyor device 1 arranged to give a system pressure signal 1aa, to a software based controller 4. The sensor 1a is used, but not limited, to collect information for finding best possible settings to mix air/material in the feeder device 2 in the conveying line 13.

The controller 4 generates control signals 5 that allow for reducing material load of transporting the transportable material by means of controlling the inlet-air (may be another fluid than air) of the material feeder device 2, and/or mass-flow of the material in the conveying line 13. In this way, an essentially controllable material mass flow can be obtained in the conveying line 13.

The controller 4 can be further adapted to generate further material feed control signals S_{mass flow} of different types, wherein the mixture air/material M can be further controlled at the material feeding point.

The controller 4 is adapted to control inlet-air of the conveying line 13 and/or a mass-flow source 1 respectively of the material to be transported in the conveying line 13 in dependence of input from the system pressure sensor 1a providing system pressure signals 1aa. The system pressure sensor 1a is typically arranged to monitor system pressure level such as system vacuum pressure and arranged to transmit a system pressure signal to a software based controller 4.

The system pressure signals 1aa are transmitted to the controller 4 and control signals are sent via a first control signal line 5 from the controller 4 to the material feeder device 2 and/or via another signal line 7 to a pipe emptying unit 30.

In an alternative embodiment (not shown in FIG. 1) more than one system pressure sensor may be provided, in the conveyor device 1 or at another location of the system 10 provided that a system pressure can be monitored. Typically, if, the conveyor device 1 comprises at least two system pressure sensors, the at least one sensor 1a provided in the conveyor device 1, is arranged to give a system pressure signal 1aa and the controller 4, is adapted to generate the control signal 5a via the first control signal line 5.

The controller 4, which may alternatively be combined in a single unit (not shown), respectively, may include a digital processor and memory. The controller 4 may be configured as one or more programmable digital computers. Connectable to the controller 4, may be one or more user interfaces (not shown) through which a system user (not shown) may monitor the operations of the system 10 and/or manually enter one or more commands to control its operation.

The controller 4 described above in relation to FIG. 1 may include one or more electrical and/or electro-mechanical components which provide for the physical movement of a component such as the valve 6 within the system 10.

The sensor 1a can also be arranged to collect information, forwarding the information via sensor communication line 3 to the controller 4, arranged to use the information from the sensors, for finding best possible settings to mix air/material in the material feeding point.

To determine the mixture of air/material, a valve 6, at a material feeding point, is arranged to control the amount of air injected into the system 10 at the feeding 2. Typically, the valve 6 is operative to provide atmospheric inlet-air to the material feeder device 2. The valve's 6 position could be set from 0 % to 100 % open. The material feeding device 2 comprises or is adapted to and can communicate with a controllable actuators 5₁, which is adapted to be adjusted in control of the controller 4 and arranged for diluting a mass-flow of the material M in the conveying line 13, for instance to prevent choking the conveying line 13 with transported material. The controllable actuator 5₁, can be electronically adjusted for instance being a so-called "proportional actuator" and adapted to control one or more valves 6 in fluid connection with the conveying line 13. The valve 6 may be separate or combined with the actuator 5₁. The valve 6 may alternatively be controlled directly without the actuator 5₁. The valve 6 (may be a vent) is adapted to either vent positive pressure to atmosphere or provide ambient air (if embodied as a vacuum system as shown and explained in relation to this particular embodiment).

The invention according to various embodiments is by the controller 4 arranged to, for instance by means of an algorithm and a computing device having a processor, memory and computer program code, executing the (not shown explicitly) algorithm, for instance determine how to set the valve's 6 position.

The valve 6 may be provided by means of a feed-hopper provided with an air-inlet valve. If nitrogen is used, the feed-hopper includes a lid.

The pipe-emptying unit 30 is controlled by an algorithm based function executed by the controller 4 which uses information from the system pressure sensor to estimate when the pipe emptying function of the pipe emptying unit 30, in particular a pipe emptying valve shall be activated.

Typically, by monitoring the system pressure level, typically a vacuum level, inside the conveyor 1, it is possible to predict when a blockage, typically in the conveying line 13 is about to happen. When an indication of blockage typically in the conveying line 13 is indicated, the controller 4 acts by a signal sent via the signal line 5 to valve 6 of the material feeding device 2 that an increase of air to the conveying line 13 is required to reduce material load in the conveying line 13. The mixture air/material is controlled by the air-inlet valve 6 at the feeder device 2.

Typically, as a first step to prevent blockage, the air-inlet valve 6 at a material feed point is arranged to ease the material load in the conveying line 13. If that doesn't help and a critical system pressure (vacuum) level is reached inside the system, herein the conveyor device 1, a second valve in the conveying line 13 is opened to cut the material flow and empty the conveying line. Once vacuum level returns from the critical level the second valve closes, and material transport in the conveying line 13 can continue.

When a critical vacuum is reached and an event (cycle) described above occurs, the cycle is evaluated and learn that it is not a safe conveying and adjust the mixture of material/air is adjusted by change the air-inlet valve 6 to a more suitable position and limit the adjustment range so the valve won't go back to an unsafe position again.

Typically, the controller 4 is arranged to store information from the system pressure sensor 1a and typically stores each cycle's vacuum information and uses it to avoid unsuitable settings which is considered leading to an unsafe cycle.

An advantage with this embodiment is that it solves the problem with too much material being fed into the vacuum conveying line 13 via the feed-hopper 2, as regards transport capacity of that particular vacuum conveyor system and material to be transported, such as to avoid clogging of material M in the conveying line 13.

### Pipe emptying function:

Now is referred to FIG. 1, which illustrates a vacuum conveyor system 10 comprising a pipe emptying unit 30 having a pipe emptying function.

The pipe emptying function is often used in a conveying system 10 that has large lifting heights. The pipe emptying unit 30 is usually placed just before the lift part 31 (indicated by the line 13 being broken in this lift part and is activated at the end of each cycle to empty the pipeline 13. Normally a charge time is set and the pipe emptying unit 30 is activated by a pipe emptying signal 1cc from the controller 4 to the pipe emptying unit 30 during a defined time at the end of the charge time.

Typically, as a first step to prevent blockage, the air-inlet valve 6 at the material-feeder device 2 is opened to ease the material load in the conveying line 13. If that doesn't help and a critical system pressure (vacuum) level is reached inside the system, a second valve 31 in the pipe emptying unit 30 in the conveying line 13 is opened to cut the material flow and empty the conveying line 13. Once vacuum level returns from the critical level the second valve 31 closes, and material transport in the conveying line 13 can continue.

Typically, when a critical vacuum is reached and an event described above (a cycle) occurs, the cycle is evaluated and learned that it is not a safe conveying and the mixture of material/air is adjusted by change the air-inlet valve 6 at the material feeding point, typically the material feeder device 2, to a more suitable position and limit the adjustment range so the valve 6 won't go back to an unsafe position again.

The foregoing description of the presented inventions has been presented for purposes of illustration and description. Furthermore, the description is not intended to limit the inventions to the forms disclosed herein. Consequently, variations and modifications commensurate with the above teachings, and skill and knowledge of the relevant art, are within the scope of the presented inventions. The embodiments described hereinabove are further intended to explain modes known of practicing the inventions and to enable others skilled in the art to utilize the inventions in such or other embodiments and with various modifications required by the particular application(s) or use(s) of the presented inventions.

## Claims

1. A conveyor system (10) for transporting a transportable material (M) by means of a fluid for transporting the transportable material (M) between a first conveying line portion (11) and a second conveying line portion (12), said conveying line portions (11, 12) comprising a plurality of pipes forming a continuous conveying line (13), said conveyor system (10) comprising:
a conveyor device (1) in fluid connection to one of said first or said second conveying line portions (11, 12) operative to provide negative air pressure or vacuum through said conveying line (13);
a material feeder device (2);
**characterised in that**
the conveyor device (1) comprises at least one system pressure sensor (1a),
wherein the at least one system pressure sensor (1a) is arranged to monitor one or more system pressure level(s) inside the conveyor device (1) and via a sensor communication line (3) give at least one material level signal (1aa) to a controller (4) and from the controller (4) via a first control signal line (5) transmit a control signal to the material feeder device (2) having a valve (6),
wherein the controller (4) is adapted to control the valve (6) and/or a mass-flow (M), respectively, of the material feeder device (2) in dependence of output from the at least one system pressure level sensor (1a) to control amount of air injected into the conveying line (13) at the material feeder device (2).

2. The conveyor system (10) according to claim 1, wherein the conveyor device (1) comprises one system pressure sensor (1a) provided in the conveyor device (1), arranged to give a system pressure signal (1aa) and the controller (4), is adapted to generate the control signal via the first control signal line (5).

3. The conveyor system (10) according to claim 1, wherein the conveyor device (1) comprises at least two system pressure sensors, at least one sensor (1a) provided in the conveyor device (1), arranged to give a system pressure signal (1aa) and the controller (4), is adapted to generate the control signal (5a) via the first control signal line (5).

4. The conveyor system (10) according to claim 1, wherein the controller (4) is arranged to store information from the at least one system pressure sensor (1a).

5. The conveyor system (10) according to claim 1 or 2, wherein the controller (4) is further adapted to generate further material feed control signals (S_{mass flow}) of different types, wherein the mixture air/material (M) can be further controlled at the material feeding point.

6. The conveyor system (10) according to any one of the claims 1-4, wherein the valve (6) is operative to provide atmospheric inlet-air to the material feeder device (2).

7. The conveyor system (10) according to claim 6, wherein the valve (6) is a vent.

8. The conveyor system (10) according to claim 6 or 7, wherein the vent (6) comprises a proportional actuator (5₁).

9. The conveyor system (10) according to any of claims the claims 1-8, wherein the controller 4 is arranged to when a critical vacuum is reached and a pipe-blockage is considered about to happen, the cycle is evaluated and learned that it is not a safe conveying and an unsafe position of the valve 6 and adjust the mixture of material/air by change the air-inlet valve 6 to a more suitable position and limit the adjustment range so the valve won't go back to the unsafe position again.

10. The conveyor system (10) of any one of the claims 1-4, wherein
